# EUROPÄISCHE PATENTSCHRIFT

(11) **EP 0 939 980 B1**
(45) Veröffentlichungstag und Bekanntmachung des Hinweises auf die Patenterteilung: **14.02.2001**
(21) Anmeldenummer: 97948891.3
(22) Anmeldetag: 06.11.1997
(51) Int. Cl.: H02B 1/01, H02B 1/30

(54) **RAHMENGESTELL MIT EINEM BODEN- UND EINEM DECKRAHMEN AUS EINEM PROFILSTRANG**
RACK WITH A LOWER FRAME AND AN UPPER FRAME MADE OF A CONTINUOUS SECTION
BAIE COMPORTANT UN CADRE INFERIEUR ET UN CADRE SUPERIEUR CONSTITUES D'UN PROFILE CONTINU

(30) Priorität: 19.11.1996 DE 19647780
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706152
(87) Internationale Veröffentlichungsnummer: WO9823002

(56) Entgegenhaltungen:
- EP-A- 0 577 140
- EP-A- 0 649 205
- DE-A- 4 140 072
- DE-U- 9 304 630
- GB-A- 2 231 117

## Beschreibung

Die Erfindung betrifft ein Rahmengestell für einen Schaltschrank mit einem Boden- und einem Deckrahmen die aus horizontalen Tiefen- und Breitenstreben zusammengesetzt sind, wobei die zueinander winklig angeordneten Tiefen- und Breitenstreben zur Außenseite des Rahmengestelles hin offene Eckaufnahmen aufweisen, an denen vertikale Rahmenprofile anbringbar sind, wobei die Stirnseiten der Tiefen- und Breitenstreben Führungen ausbilden, an denen die vertikalen Rahmenprofile angelegt sind, und wobei die Tiefen- und Breitenstreben des Boden- und/oder Deckrahmens einstückig zu einem Profilstrang miteinander verbunden sind.

Ein solches Rahmengestell ist aus der GB 2 231 117 A bekannt. In dieser Druckschrift ist ein Rahmengestell mit einem Boden- und einem Deckrahmen gezeigt, wobei der Boden- bzw. der Deckrahmen dreiteilig ausgebildet sind. Im Einzelnen ist dabei eine obere und eine untere Flanschplatte vorgesehen, die über vier Seitenteile miteinander verbunden sind. Die Flanschplatten sind mit den Seitenplatten verschweißt. In den Eckbereichen der Flanschplatten sind Ausklinkungen vorgesehen, die als Eckaufnahmen für vertikale Rahmenprofile dienen. Die U-förmigen Seitenteile ragen mit ihren stirnseitigen Enden ein Stück weit in diese Eckaufnahmen hinein. Damit bilden diese Stirnseiten Führungen an denen die vertikalen Rahmenprofile im montierten Zustand anliegen. Der Fertigungsaufwand zur Herstellung solcher Boden- und Deckrahmen ist aufwendig. Zudem bereitet die exakte Längs-Ausrichtung der vertikalen Rahmenprofil Probleme und ist nicht einfach und ohne zusätzliche Hilfsmittel durchführbar.

Aus der EP 0 557 140 A1 ist ein Schaltschrank bekannt, der zwei vertikale Seitenteile aufweist, die über horizontale Platten miteinander verbunden sind. Die vertikalen Seitenteile sind rahmenförmig ausgebildet und können aus einem Profilstrang gefertigt werden. Der Profilstrang weist winkelförmige Ausklinkungen auf. Im Bereich dieser Ausklinkungen kann der Profilstrang abgebogen werden, so daß sich ein geschlossener Rahmen ergibt.

Ein solches Rahmengestell ist beispielsweise aus der DE 36 11 693 bekannt. Der Boden- und der Deckrahmen eines solchen Rahmengestelles ist aus jeweils zwei Tiefen- und Breitenstreben und vier gleichen Eckverbindern gefertigt. Die Tiefen- und Breitenstreben sind als Hohlprofile ausgebildet, in die Steckansätze der Eckverbinder eingeschoben sind. Die vertikalen Rahmenprofile sind ebenfalls auf einem Steckansatz des Eckverbinders aufgeschoben. Um eine starre Verbindung zu erreichen, sind die Tiefen- und Breitenstreben sowie die vertikalen Rahmenprofile an dem Eckverbinder miteinander verschweißt.

Es ist Aufgabe der Erfindung, ein Rahmengestell der eingangs genannten Art zu schaffen, bei dem für den Boden- und/oder den Deckrahmen ein vereinfachter Aufbau erreicht ist und an dem sich die vertikalen Rahmenprofile einfach und paßgenau anbauen lassen.

Diese Aufgabe wird dadurch gelöst, daß der Profilstrang aus einem Stanz-Biegeteil gebildet ist, daß die Tiefen- und Breitenstreben über Verbindungsabschnitte miteinander verbunden sind, an denen die Tiefenstreben gegenüber der Breitenstrebe abbiegbar ist, und daß in vertikaler Richtung beabstandet von den Führungen Aufstandsflächen in den Eckaufnahmen des Boden- und/oder des Deckrahmens angeordnet sind, auf denen die Stirnseiten der vertikalen Rahmenprofile aufgelegt sind.

Bei einer solchen Ausgestaltung eines Rahmengestelles ist eine einfache Verbindung zwischen den im Winkel aneinandergrenzten Tiefen- und Breitenstreben erreicht. Zur Herstellung des Boden- bzw. des Deckrahmens wird zunächst ein flächiger Materialzuschnitt bzw. Stahlblech ausgestanzt. Dann erfolgt eine Profilierung des Materialzuschnittes, so daß sich ein Profilstrang ergibt. Zur Erzeugung des geschlossen Boden- /Deckrahmens werden die einstückig aneinander gebundenen Tiefen- und Breitenstreben gegeneinander abgebogen. Die freien Enden des Profilstranges können miteinander verbunden beispielsweise verschweißt oder verschraubt werden. Der Aufbau des Boden- /Deckrahmens ist im wesentlich vereinfacht, darauf zusätzliche Eckverbinder zur Aneinanderbindung der Tiefen- und Breitenstreben verzichtet ist und dieser insbesondere einteilig ausgestaltet ist. Zur paßgenauen Ausrichtung des vertikalen Rahmenprofiles in der Eckaufnahme des Boden- /Deckrahmens dienen neben den Führungen, die von den Stirnseiten der Tiefen- und Seitenstreben gebildet sind auch noch die Aufstandsflächen, auf die die vertikalen Rahmenprofile stirnseitig aufgesetzt sind. Die Aufstandsflächen ermöglichen eine exakte Positionierung der vertikalen Rahmenprofilen bezüglich der Längserstreckung.

Bei dem Boden- und/oder dem Deckrahmen kann vorgesehen sein, daß die Tiefen- und Breitenstreben stirnseitig mittels einstückig angeformter Ansätze verlängert sind, daß die Ansätze benachbarter Tiefen- und Breitenstreben des Profilstranges aneinandergebunden sind, und daß die an den Enden des Profilstranges befindlichen Tiefen- und Breitenstreben mit ihren freien Ansätzen aneinandergebunden sind. Die Ansätze können hierbei so ausgebildet sein, daß sie bereits eine Eckaufnahme für die vertikalen Rahmenprofile bereitstellen. Dadurch, daß der Verbindungspunkt zwischen den Tiefen- und Breitenstreben im Abstand zu den stirnseitigen Enden der Tiefen- und Breitenstreben gehalten ist, können diese so gegeneinander abgewinkelt sein, daß ihre stirnseitigen Endbereiche unmittelbar aneinandergrenzen.

Eine mögliche Ausgestaltung der Erfindung sieht vor, daß die Tiefen- und die Breitenstreben zum Innenraum des Rahmengestelles gerichtete, rechtwinklig zueinander stehende Innenwände aufweisen, die mit in Längsrichtung verlaufenden Reihen von Befestigungsaufnahmen versehen sind, wobei eine der Innenwände horizontal und die andere vertikal angeordnet ist, daß von der horizontalen Innenwand rechtwinklig ein Anlagesteg und von der vertikalen Innenwand ein Boden abgekantet ist, und daß der Anlagesteg und der Boden über zwei im rechten Winkel zueinanderstehende Außenwände verbunden sind. Die beiden rechtwinklig zueinanderstehenden Außenwände bilden somit eine nach außen gekehrte Eckaufnahme, in der beispielsweise die Abkantung einer Seitenwand aufgenommen werden kann. An den Reihen von Befestigungsaufnahmen können zum Innenraum des Schaltschrankes gerichtete Montageschienen oder sonstige Einbauten befestigt werden.

Die über die Stirnseiten benachbarter Tiefen- und Breitenstreben verlängerten Ansätze können Teil-Funktionselemente tragen, die zu einem Funktionselement zusammengefugt werden können. Die Zusammenfügung der einzelnen Teil-Funktionselemente erfolgt dann, wenn die Tiefen- und Breitenstreben gegeneinander verbogen werden. Durch diese Maßnahme lassen sich beispielsweise Tragvorrichtungen ausbilden, an denen der Schaltschrank beispielsweise am Deckrahmen angehoben werden kann. Denkbar ist auch, daß sich Teileinheiten zu einem Verbinder für das vertikale Rahmenprofil zusammenfügen.

Um die von den Tiefen- und Breitenstreben des Bodenrahmens umgebene Bodenfläche abzudecken, kann vorgesehen sein, daß an die Tiefen- und Breitenstreben des Bodenrahmens einstückig ein Steg angeschlossen und beabstandet zu den Tiefen- und Breitenstreben gehalten ist. Auf diesem Steg lassen sich Bodenbleche oder Kabeldurchführungen auflegen. Im Bereich zwischen den Bodenblechen und dem Steg kann eine umlaufende Dichtung angeordnet sein.

Eine mögliche Erfindungsvariante ist dadurch gekennzeichnet, daß an die Tiefen- und Breitenstreben des Deckrahmens einstückig eine Ablaufrinne für Regen- oder Spritzwasser angeformt ist. Mit dieser einfachen Maßnahme ist sichergestellt, daß kein Wasser zwischen dem Deckrahmen und angeschlossenen Seitenwänden in den Innenraum des Schaltschrankes gelangen kann.

Die Erfindung wird im folgenden anhand von den in den Zeichnungen dargestellten Ausführungsbeispielen näher erläutert. Es zeigen:
- Fig. 1: in perspektivischer Seitendarstellung ein Rahmengestell für einen Schaltschrank,
- Fig. 2: in perspektivischer Darstellung den Eckbereich eines Rahmengestelles für einen Schaltschrank, und
- Fig. 3: in perspektivischer Seitendarstellung einen teilweise montierten Bodenrahmen für das Rahmengestell gemäß Fig. 1.

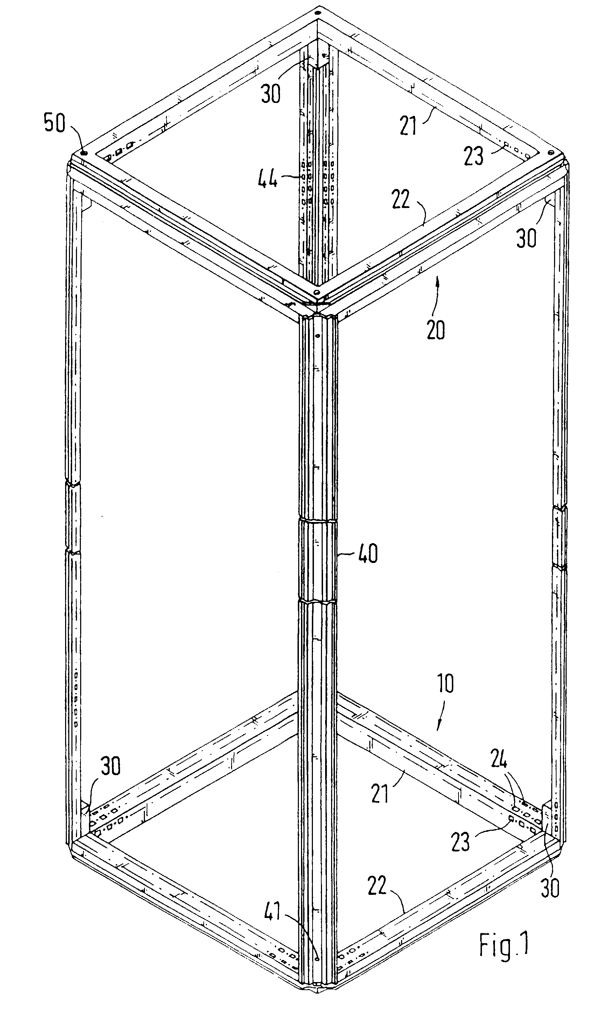

In Fig. 1 ist ein Rahmengestell für einen Schaltschrank gezeigt. Das Rahmengestell ist im wesentlichen aus einem Bodenrahmen 10, einem Deckrahmen 20 und vier vertikalen Rahmenprofilen 40 zusammengesetzt. Die vertikalen Rahmenprofile 40 verbinden den Bodenrahmen 10 mit dem Deckrahmen 20. Der Boden- und der Deckrahmen 10 und 20 sind gleich aufgebaut, so daß sie gegeneinander vertauscht werden können.

Der Boden- und der Deckrahmen 10 und 20 weisen jeweils zwei Tiefen- und zwei Breitenstreben 21, 22 auf. Die Tiefen- und Breitenstreben 21, 22 sind an ihren, dem Innenraum des Rahmengestelles zugekehrten Profilseiten mit Reihen von Befestigungsaufnahmen 23, 24 versehen. Auch die vertikalen Rahmenprofile 40 sind mit zum Innenraum des Rahmengestells gekehrten Befestigungsaufnahmen 44 versehen. An den Befestigungsaufnahmen 23, 24, 44 lassen sich elektrische Einbauten oder Montagehilfen, z.B. Montageschienen anbringen.

Die vertikalen Rahmenprofile 40 sind über Verbinder 30 mit dem Boden- bzw. Deckrahmen 10, 20 verbunden. Die Verbinder 30 sind im Bereich von Eckaufnahmen des Boden- bzw. Deckrahmens 10, 20 angeordnet. Die Befestigung der vertikalen Rahmenprofile 40 an dem Verbinder 30 erfolgt beispielsweise mittels einer Verschraubung. Hierzu können die vertikalen Rahmenprofile 40 endseitig mit Schraubaufnahmen 41 versehen sein.

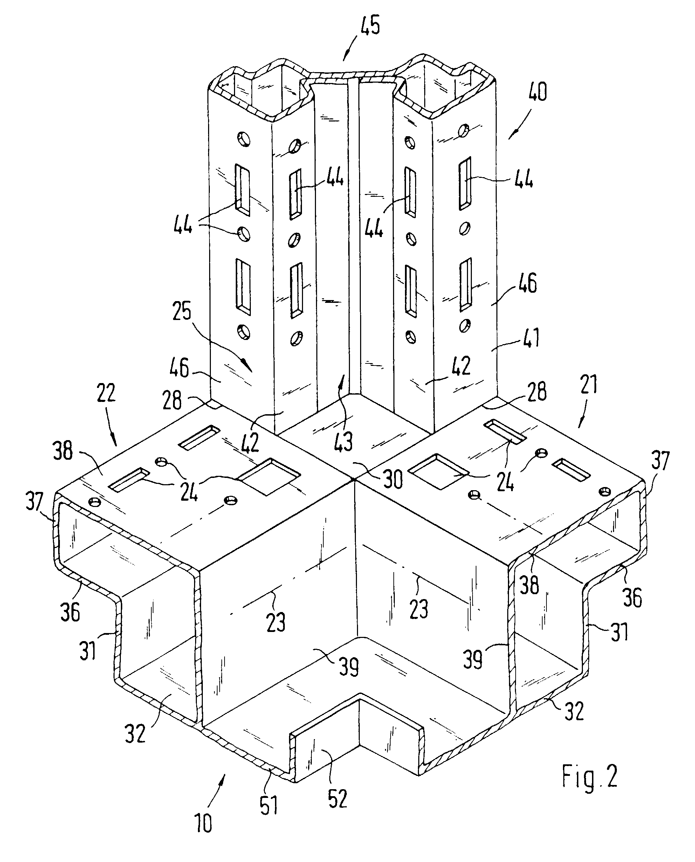

In Fig. 2 ist ein Eckbereich eines Rahmengestelles im Ausschnitt näher gezeigt. Dieses Rahmengestell entspricht im wesentlichen dem Rahmengestell gemäß Fig. 1. Ein Unterschied ist darin zu sehen, daß der Bodenrahmem 10 nach der Fig. 2 eine horizontale, auf dem Boden aufliegende Bodenplatte 51 trägt. An diese Bodenplatte 51 ist ein vertikal nach oben abstehender Steg 52 angeformt. Auf dem Steg 52 können Plattenelemente abgedichtet aufgelegt sein. Die Tiefen- und Breitenstreben 21, 22 des Bodenrahmens 10 weisen zwei rechteckig zueinanderstehende Innenwände 38, 39 auf, die dem Innenraum des Rahmengestells zugekehrt sind. Diese Innenwände 38, 39 sind mit den Reihen von Befestigungsaufnahmen 23, 24 versehen.

Die Tiefen- und Breitenstreben 21, 22 bilden im Bereich ihrer Stirnseiten eine Eckaufnahme 25, in die das vertikale Rahmenprofil 40 eingestellt werden kann. Hierzu bilden die stirnseitigen Enden der Tiefen- und Breitenstreben 21, 22 Führungen 28, die an Seitenwänden 46 des vertikalen Rahmenprofiles 40 angelegt sind. Die Seitenwände 46 stehen rechtwinklig zu den zugeordneten Seiten des Rahmengestelles. Sie sind jeweils mit einer Reihe von Befestigungsaufnahmen 44 versehen. Als Befestigungsaufnahmen 44 sind jeweils wechselweise schlitzförmige Durchbrüche und Bohrungen verwendet. Die Befestigungsaufnahmen 44 der Seitenwände 46 gehen im Teilungsraster in eine der Reihen von Befestigungsaufnahmen 24 der Innenwand 38 des Bodenrahmens 10 über. Rechtwinklig schließen an die Seitenwände 46 des vertikalen Rahmenprofils 40 Profilseiten 42 an. Die beiden Profilseiten 42 stehen rechtwinklig zueinander und bilden eine zum Innenraum des Rahmengestelles offene Innenaufnahme 43. In dieser vertikale verlaufenden Innenaufnahme 43 können Befestigungselemente, beispielsweise Profilabschnitte, eingelegt und fixiert werden. Die beiden Profilseiten 42 schlagen an dem quadratisch ausgebildeten Verbinder 30 an. Der Verbinder 30 ist fest mit dem Bodenrahmen 10 im Bereich der Eckaufnahme 25 verbunden. Das vertikale Rahmenprofil 40 kann entweder auswechselbar mit dem Bodenrahmen 10 verbunden sein, oder es ist in die Eckaufnahme 25 eingeschweißt.

Von den Innenwänden 38 der Tiefen- und Breitenstreben 21, 22 des Bodenrahmens 10 sind Anlagestege 37 abgekantet. An den Anlagestegen 37 können die Innenseiten von Seitenwänden abgedichtet angelegt sein. Die Seitenwände sind hierzu an den vertikalen Rahmenprofilen 40 angeschraubt. Die vertikalen Rahmenprofile sind mit einer Außenaufnahme 45 versehen, in die entsprechende Halterungen eingeschraubt werden können. Bevorzugt sind die Seitenwände an ihren Rändern mit Abkantungen versehen. Die vertikal verlaufenden Abkantungen können in den Außenaufnahmen 45 des vertikalen Rahmenprofils 40 aufgenommen werden. Zur Aufnahme der horizontalen Abkantungen schließen sich an den Anlagesteg 37 zwei rechtwinklig zueinanderstehende Außenwände 31, 36 an. Die beiden Außenwände 31, 36 bilden einen Absatz, der gegenüber dem Anlagesteg 37 zurückspringt. Zur Bildung eines geschlossenen Hohlprofiles sind die Tiefen- und Breitenstreben 21 und 22 mit einem Boden 32 abgeschlossen. Der Boden 32 verbindet die Außenwand 31 mit der Innenwand 39. An den Boden 32 schließt sich auch die Bodenplatte 51 für den Steg 52 an.

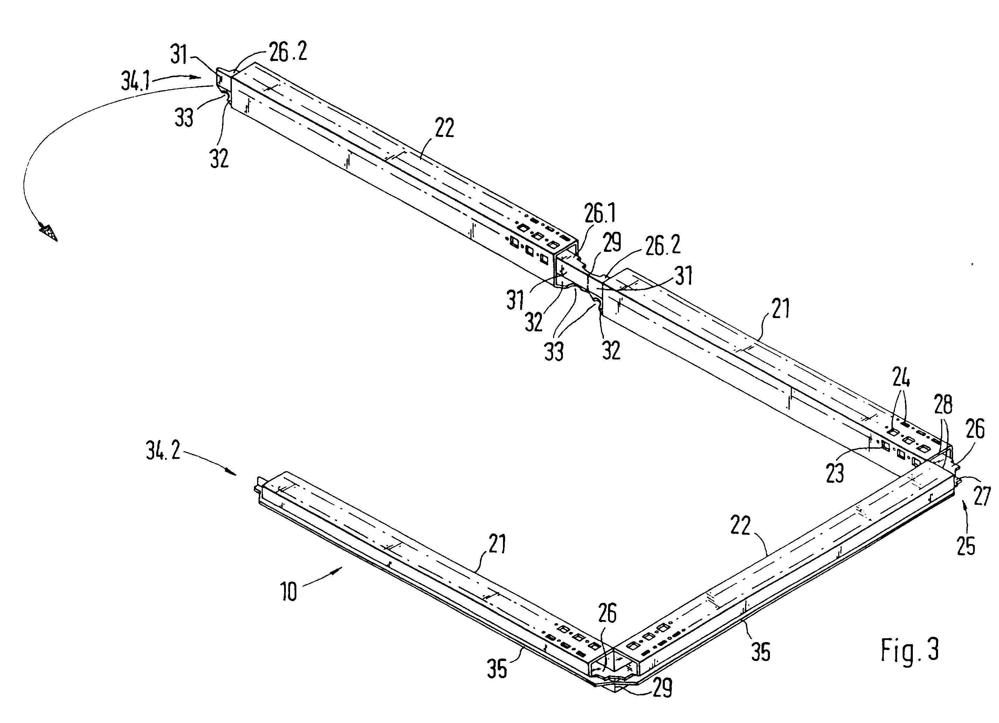

Der Aufbau eines Bodenrahmens 10 ist näher der Fig. 3 zu entnehmen. Diese Zeichnung läßt erkennen, daß der Boden- bzw. Deckrahmen 10, 20 einstückig hergestellt ist. Zur Fertigung wird zunächst ein Stanzteil aus einem Blechzuschnitt ausgeschnitten. Dieses Stanzteil wird anschließend profiliert, so daß sich ein Profilstrang ergibt. Die Tiefen- und Breitenstreben 21, 22 dieses Profilstranges sind über Verbindungsabschnitte 29 miteinander verbunden. Der Verbindungsabschnitt 29 verkörpert sich als vertikal verlaufender Blechstreifen, der mit einer Soll-Biegestelle versehen ist. Dieser Blechstreifen ist mit der Außenwand 31 der Tiefen- und Breitenstreben 21, 22 einstückig verbunden. Die zweite Außenwand 36 ist ebenso wie die Außenwand 31 über die Stirnseiten der Tiefen- und Breitenstreben 21, 22 verlängert, so daß sich eine Teilfläche 26.1 bzw. 26.2 ergibt. Ebenso ist der Boden 32 verlängert. In diesen verlängerten Bereich sind zwei halbkreisförmige Ausschnitte eingebracht. Die Ausschnitte bilden Teil-Funktionselemente 33.

Die Fig. 3 läßt erkennen, daß die einzelnen Tiefen- und Breitenstreben 21, 22 gegeneinander an dem Verbindungsabschnitt 29 abgebogen werden können. Hierbei vereinigen sich die Teil-Funktionselemente 33 miteinander zu einem einheitlichen Funktionselement. Im vorliegenden Beispiel bilden die beiden halbkreisförmigen Ausschnitte nun eine Bohrung. Diese Bohrung kann zum Einbringen einer Tragöse verwendet werden. Die beiden Teilflächen 26.1, 26.2 bieten eine Aufstandsfläche 26 für das vertikale Rahmenprofil 40. Das vertikale Rahmenprofil 40 kann mit seiner Stirnseite auf dieser Aufstandsfläche 26 aufgestellt werden. Die Aufstandsfläche 26 ist an ihrem Rand 27 entsprechend dem Außenquerschnitt des vertikalen Rahmenprofiles 40 profiliert. Es stehen damit keine störenden Teile an dem Bodenrahmen 10 vor, die eine Verletzungsgefahr bilden würden oder die den Anbau von beispielsweise Seitenwänden behindern würden.

Um den Boden- bzw. Deckrahmen 10, 20 zu schließen, sind die endseitigen Tiefen- und Breitenstreben 21, 22 des Profilstranges mit Endstücken 34.1, 34.2 versehen. Wenn die Endstücke 34.1, 34.2 aneinandergelegt sind, so entspricht die Eckausbildung in diesem Bereich den übrigen Eckausbildungen. Die Endstücke 34.1, 34.2 können aneinandergeschweißt oder in einer sonstigen geeigneten Weise miteinander verbunden werden.

Zur Erhöhung der Verwindungssteifigkeit kann es auch vorteilhaft sein, daß die übrigen Eckbereiche des Bodenrahmens über Schweißnähte verstärkt sind.

Die Fig. 3 läßt weiter erkennen, daß eine Ablaufrinne 35 an den Bodenrahmen 10 anprofiliert ist. Wie bereits erwähnt, sind der Boden- und der Deckrahmen 10 und 20 identisch ausgebildet. Wenn der in der Fig. 3 gestellte Rahmen als Deckrahmen 20 verwendet wird, dann verhindert die Ablaufrinne 35, daß Wasser zwischen dem Deckrahmen 20 und der zugeordneten Seitenwand in den Innenraum des Schaltschrankes gelangen kann.

## Patentansprüche

1. Rahmengestell für einen Schaltschrank mit einem Boden- und einem Deckrahmen (10,20) die aus horizontalen Tiefen- und Breitenstreben (21,22) zusammengesetzt sind, wobei die zueinander winklig angeordneten Tiefen- und Breitenstreben (21,22) zur Außenseite des Rahmengestelles hin offene Eckaufnahmen (25) aufweisen, an denen vertikale Rahmenprofile (40) anbringbar sind, wobei die Stirnseiten der Tiefen- und Breitenstreben (21,22) Führungen ausbilden, an denen die vertikalen Rahmenprofile (40) angelegt sind, und wobei die Tiefen- und Breitenstreben des Boden- und/oder Deckrahmens (10,20) einstückig zu einem Profilstrang miteinander verbunden sind,
dadurch gekennzeichnet,
daß der Profilstrang aus einem Stanz-Biegeteil gebildet ist,
daß die Tiefen- und Breitenstreben (21,22) über Verbindungsabschnitte (29) miteinander verbunden sind, an denen die Tiefenstreben (21) gegenüber der Breitenstrebe (22) abbiegbar ist, und
daß in vertikaler Richtung beabstandet von den Führungen (28) Aufstandsflächen (26) in den Eckaufnahmen (25) des Boden- und/oder des Deckrahmens (10,20) angeordnet sind, auf denen die Stirnseiten der vertikalen Rahmenprofile (40) aufgelegt sind.

2. Rahmengestell nach Anspruch 1,
dadurch gekennzeichnet,
daß die Tiefen- und Breitenstreben (21,22) stirnseitig mittels einstückig angeformter Ansätze verlängert sind,
daß die Ansätze benachbarter Tiefen- und Breitenstreben (21,22) des Profilstranges aneinandergebunden sind, und
daß die an den Enden des Profilstranges befindlichen Tiefen- und Breitenstreben an ihren freien Ansätzen Endstücke (34.1, 34.2) bilden, die aneinandergebunden sind.

3. Rahmengestell nach Anspruch 1 oder 2,
dadurch gekennzeichnet,
daß die Tiefen- und die Breitenstreben (21, 22) zum Innenraum des Rahmengestelles gerichtete, rechtwinklig zueinander stehende Innenwände (38,39) aufweisen, die mit in Längsrichtung verlaufenden Reihen von Befestigungsaufnahmen (23,24) versehen sind, wobei eine der Innenwände (38,39) horizontal und die andere vertikal angeordnet ist,
daß von der horizontalen Innenwand (38) rechtwinklig ein Anlagesteg (37) und von der vertikalen Innenwand (39) ein Boden (32) abgekantet ist, und
daß der Anlagesteg (37) und der Boden (32) über zwei im rechten Winkel zueinander stehende Außenwände (31,36) verbunden sind.

4. Rahmengestell nach einem der Ansprüche 2 oder 3,
dadurch gekennzeichnet,
daß die Ansätze von benachbarten Tiefen- und Breitenstreben (21,22) Teil-Funktionselemente (33) tragen, die zu einem Funktionselement (50) bei den abgewinkelten Tiefen- und Breitenstreben (21,22) zusammengefügt sind.

5. Rahmengestell nach einem der Ansprüche 1 bis 4,
dadurch gekennzeichnet,
daß an die Tiefen- und Breitenstreben (21,22) des Bodenrahmens (10) einstückig ein Steg (52) angeschlossen und beabstandet zu den Tiefen- und Breitenstreben (21,22) gehalten ist.

6. Rahmengestell nach einem der Ansprüche 1 bis 5,
dadurch gekennzeichnet,
daß an die Tiefen- und Breitenstreben (21,22) des Deckrahmens (20) einstückig eine Ablaufrinne (35) zur Ableitung von Regen- oder Spritzwasser angeformt ist.

## Claims

1. Framework for a switchgear cabinet, having a lower frame (10) and an upper frame (20), which frames comprise horizontal depth and width bars (21,22), the depth and width bars (21,22), which are disposed at an angle relative to one another, having corner receivers (25), which are open towards the outside of the framework, and to which receivers vertical frame profiles (40) are attachable, the end faces of the depth and width bars (21,22) providing guide means, onto which the vertical frame profiles (40) are fitted, and the depth and width bars of the lower and/or upper frame (10,20) being integrally interconnected to form an extruded profile, characterised in that the extruded profile is formed from a stamped and bent component part, in that the depth and width bars (21,22) are interconnected via connecting portions (29), at which the depth bars (21) are bendable relative to the width bar (22), and in that contact surfaces (26) are disposed in the corner receivers (25) of the lower and/or of the upper frame (10, 20), when spaced from the guide means (28) in the vertical direction, the end faces of the vertical frame profiles (40) being placed on said receivers.

2. Framework according to claim 1, characterised in that the depth and width bars (21,22) are lengthened at their end faces by means of integrally moulded extensions, in that the extensions of adjacent depth and width bars (21,22) of the extruded profile are joined to one another, and in that the depth and width bars, situated at the ends of the extruded profile, form, at their free extensions, end pieces (34.1, 34.2) which are joined to one another.

3. Framework according to claim 1 or 2, characterised in that the depth and the width bars (21,22) have internal walls (38,39), which are orientated towards the interior of the framework and lie at right angles to one another, said internal walls being provided with rows of mounting recesses (23,24), which rows extend in the longitudinal direction, one of the internal walls (38,39) being horizontally disposed and the other being vertically disposed, in that a contact web (37) is bent-over at right angles from the horizontal internal wall (38), and a base (32) is bent-over from the vertical internal wall (39), and in that the contact web (37) and the base (32) are connected via two external walls (31,36), which lie at right angles to each other.

4. Framework according to one of claims 2 or 3, characterised in that the extensions of adjacent depth and width bars (21,22) carry partial functional elements (33) which are joined together to form one functional element (50) when the depth and width bars (21,22) are angled.

5. Framework according to one of claims 1 to 4, characterised in that a web (52) communicates integrally with the depth and width bars (21,22) of the lower frame (10) and is retained at a spacing from the depth and width bars (21,22).

6. Framework according to one of claims 1 to 5, characterised in that a discharge channel (35) is integrally moulded on the depth and width bars (21,22) of the upper frame (20) for the drainage of rainwater or spray water.

## Revendications

1. Ossature d'encadrement pour une armoire de distribution avec un cadre de base et un cadre de couverture (10, 20) qui sont constitués d'entretoises de profondeur et de largeur (21, 22), où les entretoises de profondeur et de largeur (21, 22) formant entre elles un angle présentent des récepteurs d'angle (25) ouverts vers la face extérieure de l'ossature d'encadrement, récepteurs d'angle auxquels peuvent être fixés des profilés d'encadrement verticaux (40), où les faces frontales des entretoises de profondeur et de largeur (21, 22) présentent des guidages auxquels sont appliqués les profilés d'encadrement verticaux (40), et où les entretoises de profondeur et de largeur (21, 22) du cadre de base et/ou du cadre de couverture (10, 20) sont réunies pour former un tronçon profilé en une pièce.
caractérisée en ce que le tronçon profilé est constitué par une pièce estampée et cintrée,
en ce que les entretoises de profondeur et de largeur (21, 22) sont réunies au moyen de tronçons de liaison (29) sur lesquels les entretoises de profondeur (21) peuvent être cintrées par rapport à l'entretoise de largeur (22), et
en ce qu'à distance verticale des guidages (28) sont disposés des surfaces d'appui (26) dans les récepteurs d'angle (25) du cadre de base et/ou du cadre de couverture (10, 20), sur lesquelles sont posées les faces frontales des profilés d'encadrement verticaux (40).

2. Ossature d'encadrement suivant la revendication 1,
caractérisée
en ce qu'à leurs faces frontales, les entretoises de profondeur et de largeur (21, 22) sont prolongées par des épaulements qui en font partie intégrante,
en ce que les épaulements d'entretoises de profondeur et de largeur (21, 22) voisines du tronçon profilé sont reliés, et en ce que les entretoises de profondeur et de largeur situées aux extrémités du tronçon profilé constituent, sur leurs épaulements libres, des pièces terminales (34.1, 34.2) qui sont reliées l'une à l'autre.

3. Ossature d'encadrement suivant la revendication 1 ou la revendication 2,
caractérisée
en ce que les entretoises de profondeur et de largeur (21, 22) présentent des parois intérieures (38, 39) orientées vers l'enceinte intérieure de l'ossature d'encadrement et perpendiculaires l'une à l'autre, qui présentent des rangées de logements de fixation (23, 24) disposées en direction longitudinale, l'une des parois intérieures (38, 39) étant horizontale et l'autre paroi étant verticale,
en ce que sur la paroi intérieure horizontale (38) est formée par cintrage à angle droit une nervure d'application (37) et en ce que sur la paroi intérieure verticale (39) est formé par cintrage un fond (32), et en ce que la nervure d'application (37) et le fond (32) sont reliés par deux parois extérieures (31, 36) faisant entre elles un angle droit.

4. Ossature d'encadrement suivant l'une ou l'autre des revendications 2 et 3,
caractérisée
en ce que les épaulements d'entretoises de profondeur et de largeur (21, 22) portent des éléments fonctionnels partiels (33), qui sont réunis avec les entretoises de profondeur et de largeurs coudées (21, 22) pour former un élément fonctionnel (50).

5. Ossature d'encadrement suivant l'une quelconque des revendications de 1 à 4,
caractérisée
en ce qu'aux entretoises de profondeur et de largeur (21, 22) du cadre de base (10) est raccordée une nervure (52) qui en fait partie intégrante et qui est maintenue à distance des entretoises de profondeur et de largeur (21, 22).

6. Ossature d'encadrement suivant l'une quelconque des revendications de 1 à 4,
caractérisée
en ce que sur les entretoises de profondeur et de largeur (21, 22) du cadre de couverture (20) est formée en en faisant partie intégrante une rigole d'écoulement (35) pour l'évacuation d'eau de pluie ou de projection.
